# FASCICULE DE BREVET EUROPEEN

(11) **EP 1 342 905 B1**
(45) Date de publication et mention de la délivrance du brevet: **28.06.2006**
(21) Numéro de dépôt: 03290449.2
(22) Date de dépôt: 26.02.2003
(51) Int. Cl.: F02K 9/64, F02K 9/97, F02K 9/52

(54) **Moteur de fusée**
Raketenmotor
Rocket motor

(30) Priorité: 04.03.2002 FR 0202686
(43) Date de publication de la demande: 10.09.2003
(73) Titulaire: EADS SPACE Transportation SAS, 75116 Paris (FR); MBDA France, 75116 Paris (FR)
(72) Inventeur: Calabro, Max, 78670 Villennes (FR)
(74) Mandataire: Bonnetat, Christian

(56) Documents cités:
- EP-A- 0 401 107
- EP-A- 0 571 254
- EP-A- 0 604 279
- EP-A- 1 013 412
- WO-A-99/04156
- FR-A- 2 610 044
- US-A- 3 069 847
- US-A- 3 151 446
- US-A- 3 307 359
- US-A- 4 703 620

## Description

La présente invention concerne un moteur de fusée comportant une chambre de combustion dans laquelle est réalisée la combustion d'un combustible fluide (liquide ou gazeux), par exemple de l'hydrogène, et d'un comburant fluide (liquide ou gazeux), par exemple de l'oxygène, ladite chambre de combustion étant reliée à une tuyère divergente à travers laquelle s'échappent les gaz résultant de la combustion.

Dans les moteurs de fusée connus de ce type, à cause des températures très élevées (de l'ordre de 3 300°C) atteintes dans ladite chambre de combustion, la structure des parois est particulièrement complexe avec des réseaux de canaux pour la circulation d'un fluide de refroidissement, qui d'ailleurs peut être ledit combustible lui-même. Des exemples de parois connues sont par exemple décrits dans les documents FR-A-2 773 850, FR-A-2 774 432, FR-A-2 791 589. De plus, la structure desdites parois n'est pas uniforme, mais au contraire varie le long de l'axe du moteur, en fonction de la température régnant en regard. Enfin, notamment du fait que le combustible est utilisé comme fluide de refroidissement et peut circuler dans les deux sens opposés, ces moteurs connus nécessitent des collecteurs complexes d'alimentation en combustible.

La présente invention a pour objet de remédier à ces inconvénients en permettant la réalisation d'un moteur de fusée simple, sans collecteur complexe et comportant un nombre de pièces très limité.

A cette fin, selon l'invention, le moteur de fusée comportant une chambre de combustion dans le coeur de laquelle est réalisée la combustion d'un combustible et d'un comburant et qui est reliée, par un col, à une tuyère divergente à travers laquelle s'échappent les gaz résultant de ladite combustion, ledit coeur étant alimenté en comburant par son extrémité opposée audit col et étant entouré par une peau poreuse de matière composite thermostructurale qui reçoit du combustible sur son côté externe opposé audit coeur, une partie de ce combustible étant introduite dans ledit coeur à travers ladite peau poreuse, est remarquable en ce que ladite partie du combustible introduite dans ledit coeur à travers ladite peau poreuse constitue l'alimentation en combustible dudit moteur et en ce que la partie dudit combustible ne traversant pas ladite peau poreuse est dirigée vers ledit col pour le refroidir.

Ainsi, grâce à la présente invention, on obtient un moteur de fusée simple, de faible masse, pouvant ne comporter que peu de pièces et être aisément réalisé.

On remarquera que le document WO-99/04156 décrit un moteur de fusée comportant une chambre de combustion dans le coeur de laquelle est réalisée la combustion d'un combustible et d'un comburant et qui est reliée, par un col, à une tuyère divergente à travers laquelle s'échappent les gaz résultant de ladite combustion, ledit coeur étant alimenté en comburant par son extrémité opposée audit col et étant entouré par une peau poreuse de matière composite thermostructurale qui reçoit du combustible sur son côté externe opposé audit coeur, une partie de ce combustible étant introduite dans ledit coeur à travers ladite peau poreuse.

Cependant, on doit constater que, dans le moteur de fusée du document WO-99/04156, la partie du combustible introduite dans le coeur à travers la peau poreuse est faible et destinée au refroidissement par suage de la paroi dudit coeur et que la partie du combustible ne traversant pas la peau poreuse est retournée à des injecteurs de combustible. En revanche, dans le moteur de fusée conforme à la présente invention, la partie du combustible introduite dans ledit coeur à travers ladite peau poreuse est importante et constitue l'alimentation en combustible dudit moteur, alors que la partie dudit combustible ne traversant pas ladite peau poreuse est dirigée vers ledit col pour le refroidir.

De plus, ce document antérieur prévoit la réalisation de canaux de circulation de combustible dans ladite peau poreuse, ce que la présente invention évite par les structures originales de chambre de combustion proposées.

On remarquera de plus que, dans le moteur de fusée de l'invention, on utilise les matières composites thermostructurales --à matrice carbone ou à matrice céramique-- non seulement pour leurs propriétés mécaniques et de résistance thermique bien connues, mais encore pour leur porosité intrinsèque, qui est généralement plutôt considérée comme un inconvénient (voir le brevet US-5 583 895).

Grâce aux excellentes propriétés mécaniques et de résistance thermique des matières composites thermostructurales, le moteur de fusée conforme à la présente invention peut présenter une masse très réduite par rapport aux moteurs connus. Grâce à la porosité de ces matières composites, on peut réaliser une peau poreuse simple, bien que présentant une grande résistance à la chaleur. Bien entendu, la porosité de ladite peau peut être adaptée, de façon connue, à toute valeur désirée lors de la densification de la matrice de la matière composite qui la constitue.

De préférence, ladite peau poreuse fait partie d'une première pièce monolithique composite thermostructurale comportant deux peaux de matériau composite espacées l'une de l'autre en ménageant entre elles un espace intermédiaire et reliées l'une à l'autre par une pluralité d'entretoises filiformes de matériau composite, traversant ledit espace intermédiaire mais ne gênant en rien la libre circulation d'un fluide dans ledit espace intermédiaire.

Ainsi, si dans le moteur de fusée de la présente invention, ladite tuyère divergente est disposée en prolongement de ladite chambre de combustion, du côté dudit col opposé à cette dernière :
- ladite première pièce monolithique peut être cylindrique et être disposée coaxialement à l'axe longitudinal dudit moteur, de sorte que l'une desdites peaux est interne, alors que l'autre est externe ;
- ledit comburant peut être introduit à l'intérieur du volume cylindrique délimité par ladite peau interne, du côté opposé à ladite tuyère, ce volume formant alors le coeur de ladite chambre de combustion ; et
- ledit combustible peut être introduit dans ledit espace intermédiaire, alors à section annulaire, également du côté opposé à ladite tuyère, de sorte que ladite peau interne joue le rôle de peau poreuse pour introduire au moins une partie dudit combustible à l'intérieur du coeur de ladite chambre de combustion.

Ladite peau externe de ladite première pièce monolithique peut être rendue complètement étanche aux liquides et aux gaz, par exemple par application d'un revêtement approprié.

Il est avantageux que ladite première pièce monolithique présente un diamètre interne supérieur à celui dudit col et que l'orifice annulaire dudit espace intermédiaire, disposé du côté de ladite tuyère, se trouve en regard de la partie convergente dudit col.

Ainsi, il est possible d'utiliser aisément une faible partie du combustible, introduit dans ledit espace intermédiaire à section annulaire mais ne traversant pas ladite peau interne en direction du coeur, pour refroidir la zone du col.

Ladite tuyère peut comporter, au-delà dudit col, un fourreau apte à loger ladite première pièce monolithique.

Ainsi, l'ensemble de la tuyère, du col et du fourreau forme alors une seconde pièce monolithique, dans laquelle est insérée ladite première pièce monolithique. Cette seconde pièce monolithique peut, par exemple, être métallique. Cependant, pour les raisons mentionnées ci-dessus, il est avantageux que, tout comme ladite première pièce, elle soit elle-même réalisée en matière composite thermostructurale. Dans ce cas, ladite seconde pièce monolithique peut avantageusement constituer un prolongement de ladite peau externe de ladite première pièce monolithique, ce prolongement faisant partie intégrante de ladite peau externe. Il en résulte alors que lesdites première et seconde pièces monolithiques ne forment qu'une seule pièce.

Dans une variante de réalisation du moteur de fusée conforme à la présente invention, ladite chambre de combustion est disposée dans ladite tuyère divergente, au voisinage du sommet de cette dernière.

Dans ce cas, il est avantageux que :
- ladite chambre de combustion comporte :
   . une première pièce monolithique composite intérieure, de forme cylindrique, disposée coaxialement à l'axe du moteur et présentant une peau interne et une peau externe séparées par un espace intermédiaire à section annulaire ; et
   . une première pièce monolithique composite extérieure, de forme cylindrique, disposée coaxialement audit axe et présentant une peau interne et une peau externe séparées par un espace intermédiaire à section annulaire, ladite première pièce extérieure entourant ladite première pièce intérieure, de façon à former entre elles un coeur de combustion annulaire ;
- lesdites premières pièces intérieure et extérieure ménagent entre elles et le sommet de ladite tuyère divergente un passage annulaire de communication avec ladite tuyère ;
- ledit comburant est introduit à l'intérieur dudit coeur de combustion annulaire, du côté opposé audit sommet de la tuyère ; et
- ledit combustible est introduit dans lesdits espaces intermédiaires à section annulaire desdites premières pièces intérieure et extérieure, également du côté opposé audit sommet.

Ainsi, dans ce mode de réalisation, le combustible est introduit dans ledit coeur de combustion annulaire à travers la peau externe de ladite première pièce intérieure et à travers la peau interne de ladite première pièce extérieure. Les gaz de combustion passent alors de ladite chambre de combustion annulaire à la tuyère divergente, à travers ledit passage annulaire de communication formant col. Le combustible traversant la peau externe de la première pièce extérieure permet de refroidir la tuyère divergente au voisinage dudit passage annulaire de communication. En cas de besoin, la peau interne de la première pièce intérieure est rendue étanche aux liquides et aux gaz.

Avantageusement, le sommet de ladite tuyère divergente est percé d'un orifice et l'ensemble desdites premières pièces intérieure et extérieure est solidarisé de ladite tuyère par une troisième pièce monolithique de matière composite en forme de tromblon.

De préférence, ladite chambre de combustion est alimentée en combustible par l'intermédiaire d'une pièce en forme de dôme, disposée du côté de ladite chambre de combustion opposé au sommet de la tuyère et dont la paroi convexe est dirigée du côté de ladite tuyère et est réalisée en matière composite thermostructurale.

Les figures du dessin annexé feront bien comprendre comment l'invention peut être réalisée. Sur ces figures, des références identiques désignent des éléments semblables.
La figure 1 représente, en coupe axiale schématique, un premier exemple de réalisation du moteur de fusée conforme à la présente invention.
Les figures 2A à 2F illustrent schématiquement un mode de réalisation de la chambre de combustion du moteur de la figure 1.
Les figures 3A à 3D illustrent schématiquement, à plus grande échelle, les étapes de procédé permettant de passer de l'état de la figure 2E à l'état de la figure 2F, la figure 3A correspondant à la ligne de coupe IIIA-IIIA de la figure 2E et la figure 3D à la ligne de coupe IIID-IIID de la figure 2F. Sur ces figures 3A à 3D, les deux tronçons de chaque point de piquage sont représentés très écartés à des fins de clarté.
La figure 4 illustre schématiquement un mode de réalisation du moteur de la figure 1, comportant la chambre de combustion de la figure 2F.
La figure 5 représente, en coupe axiale schématique, un second exemple de réalisation du moteur de fusée conforme à la présente invention.

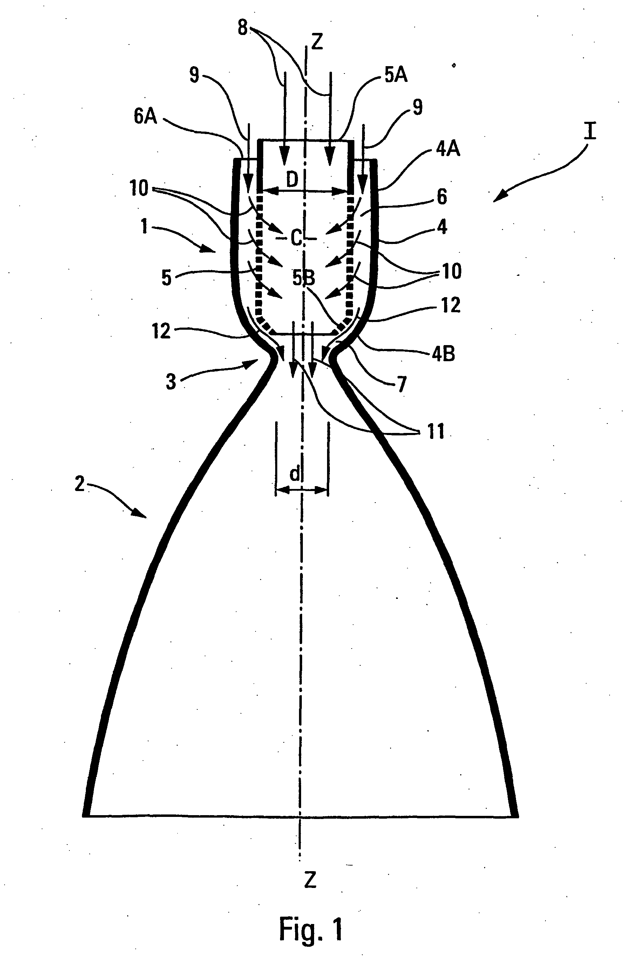

L'exemple de réalisation du moteur de fusée I, conforme à la présente invention et représenté schématiquement sur la figure 1, comporte une chambre de combustion 1 et une tuyère divergente 2, reliée l'une à l'autre par un col 3. L'axe longitudinal du moteur I porte la référence Z-Z.

La chambre de combustion 1 comporte une paroi externe 4, dont la partie 4A, opposée à la tuyère 2, est sensiblement cylindrique, tandis que la partie 4B de la paroi externe 4, disposée du côté de ladite tuyère 2, est convergente pour se raccorder au col 3. Ainsi, la paroi externe 4, le col 3 et la tuyère 2 sont en continuité et sont susceptibles de constituer une pièce unique.

La chambre de combustion 1 comporte de plus une paroi interne poreuse 5, dont l'axe est confondu avec l'axe Z-Z et qui est disposée à l'intérieur de la paroi externe 4, en ménageant avec cette dernière un espace intermédiaire cylindrique à section annulaire 6. La paroi interne poreuse 5 est également sensiblement cylindrique, et son diamètre D est plus grand que le diamètre d du col 3. En regard de la partie convergente 4B de la paroi externe 4, la paroi interne 5 comporte une partie convergente 5B, qui détermine, avec ladite partie convergente 4B, un passage annulaire 7, formant une restriction pour l'espace annulaire 6.

Dans l'exemple représenté, ladite chambre de combustion 1 est constituée, au moins en partie, par une première pièce monolithique de matière composite thermostructurale, dans laquelle ladite paroi interne poreuse 5 est constituée par une peau de matière composite. De même, ladite tuyère divergente 2 peut constituer ou faire partie d'une seconde pièce monolithique de matière composite thermostructurale. Lesdites première et seconde pièces monolithiques, qui peuvent chacune comporter une partie du col 3 ou bien dont l'une seule d'entre elles comporte ledit col 3, sont solidarisées l'une de l'autre ou réalisées en une unique pièce monolithique pour former le moteur de fusée I.

Dans la chambre de combustion 1, la combustion se produit à l'intérieur du volume cylindrique C délimité par la paroi interne poreuse 5 et formant le coeur de ladite chambre de combustion. Un flux de comburant, essentiellement de l'oxygène, est introduit à l'intérieur du coeur C à travers l'extrémité 5A de ladite paroi interne 5, opposée à la tuyère 2, comme cela est illustré par les flèches 8. Un flux de combustible, essentiellement de l'hydrogène, est introduit dans l'espace intermédiaire annulaire 6, à travers l'extrémité 6A de celui-ci opposée à la tuyère 2, comme cela est illustré par les flèches 9. Grâce à la porosité appropriée de la paroi composite interne 5 et à la restriction formée par le passage 7, la plus grande partie du combustible introduit dans l'espace annulaire 6 traverse ladite paroi composite interne 5 et pénètre à l'intérieur du coeur Ccomme cela est indiqué par les flèches 10-- où il est brûlé, grâce à l'apport du comburant (flèches 8).

Les gaz résultant de la combustion s'échappent dudit coeur C, à travers l'extrémité 5B de la paroi 5, opposée à l'extrémité 5A, et passent dans la tuyère 2, en traversant le col 3, comme cela est illustré par les flèches 11.

Par ailleurs, une petite partie du combustible introduit dans l'espace intermédiaire annulaire 6 (flèches 9), passe à travers le passage annulaire 7, comme cela est illustré par les flèches 12, en refroidissant la partie 5B de la paroi interne 5, la partie 4B de la paroi externe 4 et le col 3. Au niveau de celui-ci, le combustible traversant le passage annulaire convergent 7 se mélange aux gaz de combustion (flèches 11).

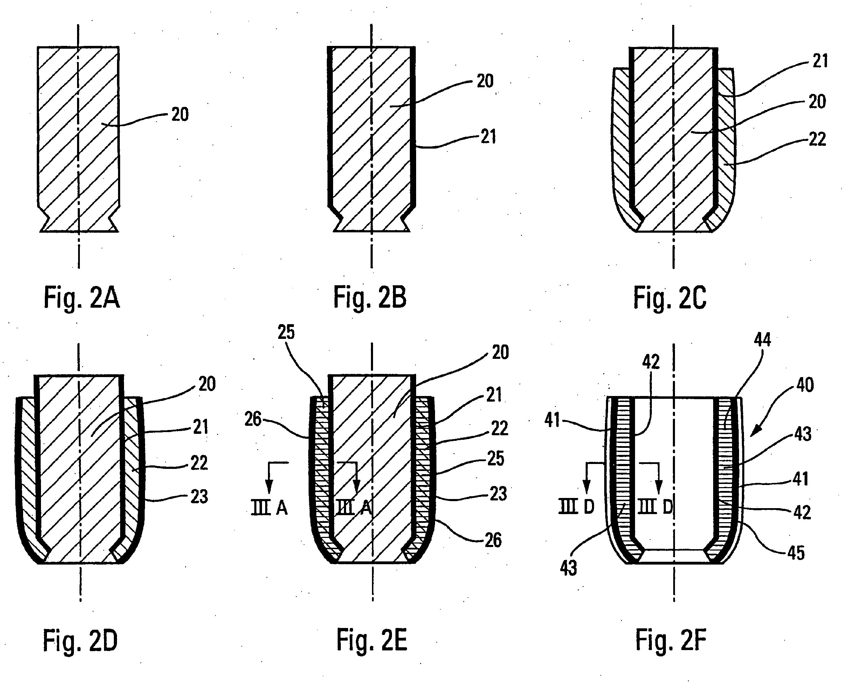

Les figures 2A à 2F, 3A à 3D et 4 illustrent schématiquement un mode de réalisation, sous forme de matière composite, du moteur I de la figure 1.

Pour ce faire, on commence par réaliser, par exemple en une matière synthétique mousse susceptible d'être piquée par une aiguille, un mandrin 20 (voir la figure 2A) présentant la forme intérieure de la paroi poreuse interne 5, y compris la partie convergente 5B. Puis, sur ce mandrin 20, on applique de toutes manières connues (bobinage, tissage, etc ...) une structure 21 de fibres à haute résistance, telles que des fibres à base de carbone ou de carbure de silicium, destinée à constituer une armature fibreuse pour ladite paroi interne 5 (voir la figure 2B). Ensuite, sur la structure fibreuse 21, on applique une âme annulaire 22, par exemple en une mousse de polystyrène, non imprégnable par les résines destinées à former les matrices de matière composite, et représentative de l'espace intermédiaire annulaire 6, y compris le passage 7 (voir la figure 2C). La matière de l'âme 22 est susceptible d'être piquée par une aiguille et d'être éliminée thermiquement.

Sur l'âme annulaire 22, on applique une structure 23 de fibres à haute résistance (C, SiC, ...) destinée à constituer une armature fibreuse pour au moins une partie de ladite paroi externe 4 (voir la figure 2D).

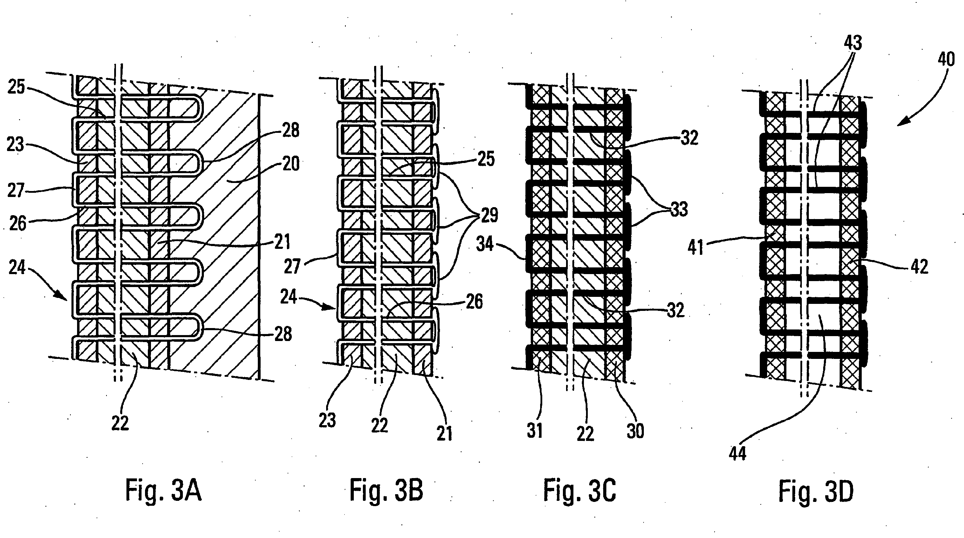

Comme le montrent la figure 2E et, à plus grande échelle, la figure 3A, la structure fibreuse 21, l'âme annulaire 22 et la structure fibreuse 23 sont rendues solidaires les unes des autres par piquage sans nouage d'un fil continu 24, lui-même constitué d'une pluralité de fibres à haute résistance (C, SiC, ...). Le fil continu 24 forme des tronçons 25, 26 traversant les éléments 21, 22, 23 et reliés alternativement les uns aux autres par des ponts 27, appliqués sur la structure fibreuse 23, et par des boucles 28, pénétrant dans le mandrin 20.

Après cette opération de piquage, le mandrin 20 est éliminé et les boucles 28 sont rabattues et pressées contre la structure fibreuse 21 pour former des amas 29 (voir la figure 3B), puis l'ensemble des structures fibreuses 21 et 23 est imprégné par une résine durcissable, relativement peu visqueuse et éventuellement diluée, à l'alcool par exemple. L'imprégnation est réalisée de préférence sous dépression, de façon que ladite résine pénètre, non seulement dans les structures fibreuses 21 et 23, mais encore le long et dans les tronçons de fil traversants 25, 26. Au cours de cette imprégnation, l'âme 22 n'est pas imprégnée par la résine, puisqu'imperméable à celle-ci.

La résine imprégnée est ensuite durcie, par exemple par élévation de température, pendant une durée suffisante pour que les structures fibreuses 21 et 23 deviennent des peaux rigides 30 et 31, respectivement, et que les tronçons de fil traversants 25 et 26 deviennent des entretoises rigides filiformes 32 (voir la figure 3C). Ces entretoises 32 sont fortement ancrées à leurs extrémités dans les peaux rigides 30 et 31, grâce aux ancrages rigides 33 et 34 formés, respectivement, par les amas 29 et par les ponts 27.

Pour former la matrice de l'ensemble des peaux rigides 30 et 31 et des entretoises 32, on soumet ledit ensemble à une pyrolyse à température élevée, par exemple de l'ordre de 900°C, ce qui stabilise la géométrie dudit ensemble et élimine l'âme 22. Eventuellement, cet ensemble peut être densifié et traité de manière connue pour que sa matrice devienne du type céramique. On obtient alors la pièce monolithique 40 (voir les figures 2F et 3D), destinée à former, au moins en partie, la chambre de combustion 1 et comportant :
- une peau externe 41 de matériau composite, issue de la peau 31 et destinée à former, au moins en partie, la paroi externe 4, 4A, 4B de la chambre de combustion 1 ;
- une peau interne 42 de matériau composite, issue de la peau 30 et destinée à former la paroi interne 5, 5A, 5B de la chambre de combustion 1 ; et
- une pluralité d'entretoises filiformes 43 de matériau composite, issues des entretoises 32.

Dans cette pièce monolithique 40, les peaux 41 et 42 sont espacées l'une de l'autre en délimitant un espace annulaire 44, traversé sans être obturé par les entretoises 43 et destiné à former l'espace annulaire 6 de la chambre de combustion 1.

On sait que, par nature, une matière composite est poreuse et que cette porosité dépend des conditions de formation de la matrice. On conçoit donc aisément que la porosité de la peau interne 42 peut être ajustée pour communiquer à cette dernière la porosité exigée de la paroi interne 5, 5A, 5B. Ce faisant, on communique à la peau externe 41 une porosité identique à celle désirée pour la peau interne 42. Or la paroi externe 4 devant être étanche, il peut être avantageux de revêtir extérieurement la peau extrême 41 d'un revêtement d'étanchéité 45, comme cela est représenté sur la figure 2F.

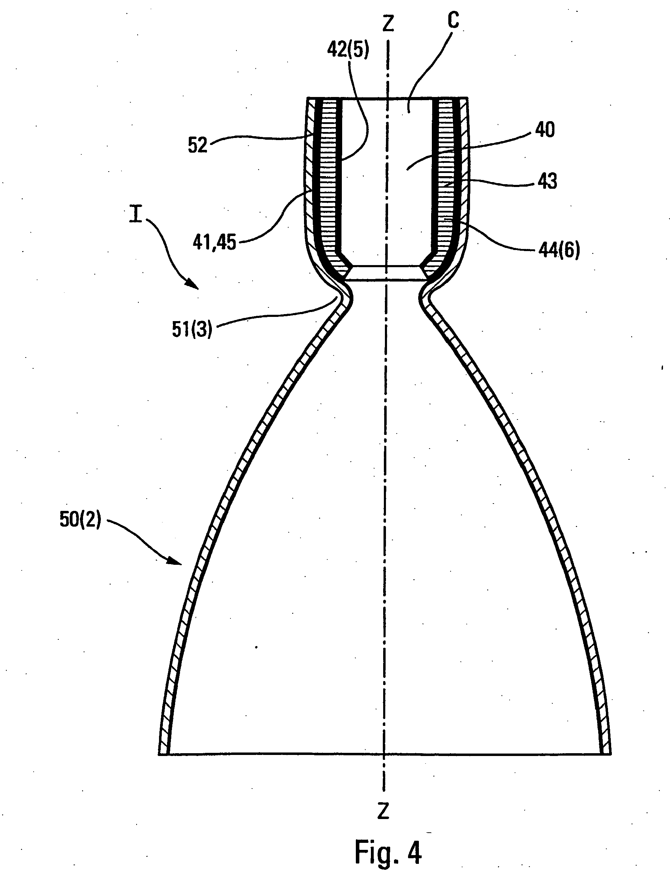

On réalise une seconde pièce monolithique composite 50 destinée à former au moins ladite tuyère 2. Une telle seconde pièce composite 50 est aisément réalisable par bobinage ou tissage de fibres résistances (C, Si, ...) sur un mandrin adéquat, puis imprégnation par une résine et pyrolyse de la matrice ainsi formée. Ensuite, pour obtenir le moteur I, on assemble la pièce monolithique composite 40 à la pièce monolithique composite 50. Ceci peut être obtenu, de toutes manières connues, par exemple mécaniquement ou par collage. De plus, dans un mode de réalisation préféré, illustré schématiquement sur la figure 4, on prévoit sur la pièce composite monolithique 50, non seulement une partie 51, apte à former le col 3, mais également une partie 52, apte à servir de logement à ladite pièce monolithique composite 40. Dans ce cas, la paroi externe 4 du moteur I est alors formée par la superposition et l'assemblage de la peau 41, éventuellement du revêtement 45 et de la partie 52.

En variante, on comprendra aisément de ce qui vient d'être décrit, que la seconde pièce composite 50 peut être le prolongement de la peau externe 41 et former une pièce monolithique avec cette dernière, comme cela est illustré schématiquement sur la figure 1.

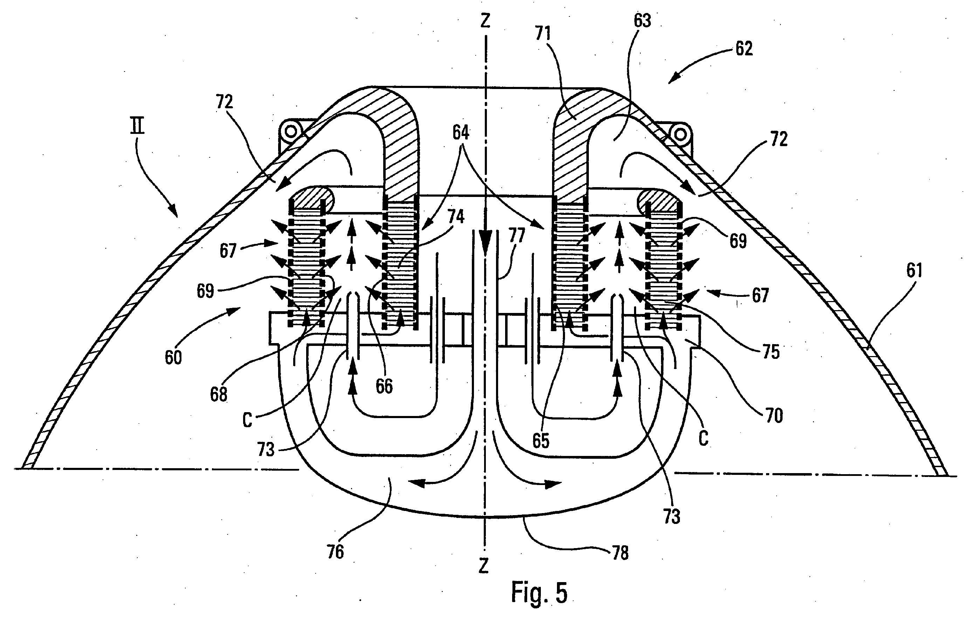

Dans la variante de réalisation II du moteur de fusée, conforme à la présente invention et représentée sur la figure 5, la chambre de combustion 60 est disposée à l'intérieur de la tuyère divergente 61, au voisinage du sommet 62 de cette dernière. Cette tuyère divergente 61 est, par exemple, constituée par une pièce monolithique composite, obtenue de façon semblable à celle de la tuyère 2, décrite ci-dessus. De plus, on prévoit que le sommet 62 de la tuyère divergente 61 est percé d'un orifice 63.

La chambre de combustion 60 comporte :
- une pièce monolithique composite intérieure 64, de forme cylindrique, disposée coaxialement à l'axe Z-Z du moteur et présentant une peau composite interne 65 et une peau composite externe 66. Cette pièce composite 64 peut être obtenue de la façon décrite ci-dessus à propos de la pièce composite 40 ; et
- une pièce monolithique composite extérieure 67, de forme cylindrique, disposée coaxialement à l'axe Z-Z et présentant une peau composite interne 68 et une peau composite externe 69. La pièce composite 67 peut également être obtenue de façon semblable à la pièce 40.

La pièce composite extérieure 67 entoure la pièce composite intérieure 64 en délimitant entre elles un coeur annulaire C pour ladite chambre de combustion 60.

Les pièces composites 64 et 67 sont solidarisées, du côté de la tuyère 61, à un collecteur 70 apte à les alimenter en combustible gazeux et, du côté opposé, à une troisième pièce monolithique composite 71, en forme de tromblon, les reliant à la tuyère divergente 61, le long du bord de l'orifice 63. La chambre de combustion 60 ménage, entre elle et le sommet de la tuyère 61, un passage annulaire 72 formant col et assurant la communication avec ladite tuyère.

Tout comme la paroi 41 de la pièce 40, la peau interne 65 de la pièce intérieure 64 est avantageusement rendue étanche au gaz.

A travers la pièce 71, le comburant gazeux est introduit à l'intérieur du coeur annulaire C, du côté opposé au sommet 62, par l'intermédiaire d'injecteurs 73. A travers la pièce 71 et le collecteur 70, le combustible est introduit, du côté opposé au sommet 62, dans les espaces intermédiaires annulaires 74 et 75 (analogues à l'espace intermédiaire 44 de la pièce 40) des pièces composites 64 et 67. A travers la peau externe 66 de la pièce 64 et à travers la peau interne 68 de la pièce 67, ledit combustible passe dans le coeur annulaire C, où il brûle avec le comburant. Les gaz de combustion s'échappent de la chambre de combustion 60 du côté du sommet 62 et passent dans la tuyère 61 à travers le col 72. Le gaz combustible s'échappant à travers la peau externe 69 refroidit la tuyère 61, au voisinage de la chambre de combustion 60. Les trajets gazeux sont indiqués par des flèches sur la figure 5.

Dans le mode de réalisation représenté sur la figure 5, le dispositif d'alimentation en combustible comporte un dôme creux 76, alimenté en combustible par une conduite 77 passant à travers ladite pièce 71 et alimentant lui-même le collecteur 70. La convexité du dôme 76 est dirigée du côté de la tuyère 61, à l'opposé de la chambre de combustion 60. De préférence, au moins la paroi convexe 78 dudit dôme 76 est réalisée en matière composite thermostructurale --donc poreuse--, de façon que ce dernier soit refroidi par suage dudit combustible à travers ladite paroi convexe 78.

## Revendications

1. Moteur de fusée (I, II) comportant une chambre de combustion (1, 60) dans le coeur (C) de laquelle est réalisée la combustion d'un combustible et d'un comburant et qui est reliée, par un col (3, 72), à une tuyère divergente (2, 61) à travers laquelle s'échappent les gaz résultant de ladite combustion, ledit coeur (C) étant alimenté en comburant par son extrémité (5A) opposée audit col et étant entouré par une peau poreuse de matière composite thermostructurale (5, 42, 66, 68) qui reçoit du combustible sur son côté externe opposé audit coeur, une partie de ce combustible étant introduite dans ledit coeur à travers ladite peau poreuse, **caractérisé en ce que** ladite partie du combustible introduite dans ledit coeur (C) à travers ladite peau poreuse (5, 42, 66, 68) constitue l'alimentation en combustible dudit moteur et **en ce que** la partie dudit combustible ne traversant pas ladite peau poreuse est dirigée vers ledit col (3, 72) pour le refroidir.

2. Moteur de fusée selon la revendication 1,
**caractérisé en ce que** ladite peau poreuse (5, 42, 66, 68) fait partie d'une première pièce monolithique composite thermostructurale (40, 61, 67) comportant deux peaux de matériau composite (41, 42 ; 65, 66 ; 68, 69) espacées l'une de l'autre en ménageant entre elles un espace intermédiaire (44, 73, 74) et reliées l'une à l'autre par une pluralité d'entretoises filiformes (43) de matériau composite.

3. Moteur de fusée selon la revendication 2, qui est pourvu d'un axe longitudinal (Z-Z) et dans lequel ladite tuyère divergente (2) est disposée en prolongement de ladite chambre de combustion (1), du côté dudit col (3) opposé à cette dernière,
**caractérisé en ce que** :
- ladite première pièce monolithique (40) est cylindrique et disposée coaxialement audit axe longitudinal (Z-Z), de sorte que l'une desdites peaux (5, 42) est interne, alors que l'autre (41) est externe ;
- ledit comburant est introduit à l'intérieur du volume cylindrique (C) délimité par ladite peau interne (5, 42) et formant le coeur de ladite chambre de combustion, du côté opposé à ladite tuyère (2) ; et
- ledit combustible est introduit dans ledit espace intermédiaire (6, 44), alors à section annulaire, également du côté opposé à ladite tuyère (2).

4. Moteur de fusée selon la revendication 3,
**caractérisé en ce que** ladite peau externe (41) de ladite première pièce monolithique (40) est rendue étanche aux liquides et aux gaz.

5. Moteur de fusée selon l'une des revendications 3 ou 4,
**caractérisé en ce que** ladite première pièce monolithique (40) présente un diamètre interne (D) supérieur à celui (d) dudit col et **en ce que** l'orifice annulaire (7) dudit espace intermédiaire (6), disposé du côté de ladite tuyère (2), se trouve en regard de la partie convergente (4B) dudit col (3).

6. Moteur de fusée selon l'une des revendications 2 à 5,
**caractérisé en ce que** ladite tuyère (2) comporte, au-delà dudit col (3), un fourreau (52) apte à loger ladite première pièce monolithique.

7. Moteur de fusée selon l'une des revendications 2 à 6,
**caractérisé en ce que** ladite tuyère (2) est constituée par une seconde pièce monolithique de matière composite (50, 61).

8. Moteur de fusée selon l'une des revendications 2 à 5,
**caractérisé en ce que** ladite tuyère (2) est constituée par une seconde pièce monolithique de matière composite (50) et **en ce que** ladite seconde pièce monolithique (50) constitue un prolongement de ladite peau externe (41) de ladite première pièce monolithique (40), ce prolongement faisant partie intégrante de ladite peau externe (41).

9. Moteur de fusée selon la revendication 2, qui est pourvu d'un axe longitudinal (Z-Z) et dans lequel ladite chambre de combustion (60) est disposée dans ladite tuyère divergente (61), au voisinage du sommet (62) de cette dernière,
**caractérisé en ce que :**
- ladite chambre de combustion (60) comporte :
. une première pièce monolithique composite intérieure (64), de forme cylindrique, disposée coaxialement audit axe (Z-Z) et présentant une peau composite interne (65) et une peau composite externe (66) ; et
. une première pièce monolithique composite extérieure (67), de forme cylindrique, disposée coaxialement audit axe (Z-Z) et présentant une peau composite interne (68) et une peau composite externe (69), ladite première pièce extérieure (67) entourant ladite première pièce intérieure, de façon à former entre elles un coeur annulaire (C) pour ladite chambre de combustion (60) ;
- lesdites premières pièces intérieure (64) et extérieure (67) ménagent entre elles et le sommet de ladite tuyère divergente un passage annulaire (72) de communication avec ladite tuyère (61) ;
- ledit comburant est introduit à l'intérieur du coeur annulaire (C) de ladite chambre de combustion, du côté opposé audit sommet de la tuyère ; et
- ledit combustible est introduit dans les espaces intermédiaires (74, 75) à section annulaire desdites premières pièces intérieure (64) et extérieure (67), du côté opposé audit sommet de la tuyère.

10. Moteur de fusée selon la revendication 9,
**caractérisé en ce que** la peau interne (65) de la première pièce intérieure (64) est rendue étanche aux liquides et aux gaz.

11. Moteur de fusée selon l'une des revendications 9 ou 10,
**caractérisé en ce que** le sommet (62) de ladite tuyère divergente (61) est percé d'un orifice (63) et **en ce que** l'ensemble desdites premières pièces intérieure (64) et extérieure (67) est solidarisé de ladite tuyère (61) par une troisième pièce monolithique de matière composite (71) en forme de tromblon.

12. Moteur de fusée selon l'une des revendications 9 à 11,
**caractérisé en ce que** ladite chambre de combustion (60) est alimentée en combustible par l'intermédiaire d'une pièce (76) en forme de dôme, disposée du côté de ladite chambre de combustion opposé au sommet de la tuyère et dont la paroi convexe (78) est dirigée du côté de la tuyère et est réalisée en matière composite thermostructurale.

## Claims

1. A rocket engine (I, II) comprising a combustion chamber (1, 60) in the heart (C) of which a fuel and an oxidizer are burnt and which is connected, by a throat (3, 72), to a divergent nozzle (2, 61) through which the gases resulting from said combustion escape, said heart (C) being supplied with oxidizer via its opposite end (5A) to said throat and being surrounded by a porous skin of thermostructural composite (5, 42, 66, 68) which receives fuel on its opposite outer side to said heart, some of this fuel being introduced into said heart through said porous skin, **characterized in that** said proportion of the fuel introduced into said heart (C) through said porous skin (5, 42, 66, 68) constitutes the fuel supply to said engine and **in that** the proportion of said fuel not passing through said porous skin is directed toward said throat (3, 72) to cool it.

2. The rocket engine as claimed in claim 1,
**characterized in that** said porous skin (5, 42, 66, 68) forms part of a first monolithic piece of thermostructural composite (40, 61, 67) comprising two skins of composite (41, 42; 65, 66; 68, 69) spaced apart from one another leaving between them an intermediate space (44, 73, 74) and joined together by a plurality of threadlike spacers (43) of composite.

3. The rocket engine as claimed in claim 2, which is provided with a longitudinal axis (Z-Z) and in which said divergent nozzle (2) is arranged in the continuation of said combustion chamber (1), on the opposite side of said throat (3) to said combustion chamber,
**characterized in that**:
- said first monolithic piece (40) is cylindrical and arranged coaxially with respect to said longitudinal axis (Z-Z) so that one of said skins (5, 42) is an inner skin whereas the other (41) is an outer skin;
- said oxidizer is introduced into the cylindrical volume (C) delimited by said inner skin (5, 42) and forming the heart of said combustion chamber, on the opposite side to said nozzle (2); and
- said fuel is introduced into said intermediate space (6, 44), which therefore has an annular cross section, also on the opposite side to said nozzle (2).

4. The rocket engine as claimed in claim 3,
**characterized in that** said outer skin (41) of said first monolithic piece (40) is sealed against liquids and against gases.

5. The rocket engine as claimed in either of claims 3 and 4,
**characterized in that** said first monolithic piece (40) has an inside diameter (D) greater than that (d) of said throat and **in that** the annular orifice (7) of said intermediate space (6), arranged on the same side as said nozzle (2), lies facing the convergent part (4B) of said throat (3).

6. The rocket engine as claimed in one of claims 2 to 5,
**characterized in that** said nozzle (2) comprises, beyond said throat (3), a sheath (52) able to house said first monolithic piece.

7. The rocket engine as claimed in one of claims 2 to 6,
**characterized in that** said nozzle (2) consists of a second monolithic piece of composite (50, 61).

8. The rocket engine as claimed in one of claims 2 to 5,
**characterized in that** said nozzle (2) consists of a second monolithic piece of composite (50) and **in that** said second monolithic piece (50) constitutes a continuation of said outer skin (41) of said first monolithic piece (40), this continuation forming an integral part of said outer skin (41).

9. The rocket engine as claimed in claim 2, which is provided with a longitudinal axis (Z-Z) and in which said combustion chamber (60) is arranged in said divergent nozzle (61) near the vertex (62) thereof,
**characterized in that**:
- said combustion chamber (60) comprises:
• an inner first monolithic piece of composite (64), of cylindrical shape, arranged coaxially with respect to said axis (Z-Z) and having an inner composite skin (65) and an outer composite skin (66); and
• an outer first monolithic piece of composite (67), of cylindrical shape, arranged coaxially with respect to said axis (Z-Z) and having an inner composite skin (68) and an outer composite skin (69), said outer first piece (67) surrounding said inner first piece, so as to form between them an annular heart (C) for said combustion chamber (60);
- said inner (64) and outer (67) first pieces forming between them and the vertex of said divergent nozzle an annular passage (72) for communication with said nozzle (61);
- said oxidizer is introduced into the annular heart (C) of said combustion chamber from the opposite side to said vertex of the nozzle; and
- said fuel is introduced into the intermediate spaces (74, 75), of annular cross section, of said inner (64) and outer (67) first pieces from the opposite side to said vertex of the nozzle.

10. The rocket engine as claimed in claim 9,
**characterized in that** the inner skin (65) of the inner first piece (64) is sealed against liquids and against gases.

11. The rocket engine as claimed in either of claims 9 and 10,
**characterized in that** the vertex (62) of said divergent nozzle (61) is pierced with an orifice (63) and **in that** the collection of said inner (64) and outer (67) first pieces is secured to said nozzle (61) by a third monolithic piece of composite (71) in the shape of a horn.

12. The rocket engine as claimed in one of claims 9 to 11,
**characterized in that** said combustion chamber (60) is supplied with fuel via a dome-shaped piece (76) arranged on the opposite side of said combustion chamber to the vertex of the nozzle and the convex wall (78) of which faces toward the nozzle and is made of thermostructural composite.

## Patentansprüche

1. Raketenmotor (I, II) mit einer Brennkammer (1, 60), in deren Kern (C) die Verbrennung eines Brennstoffs und eines Verbrennungsstoffs durchgeführt wird und die über einen Hals (3, 72) mit einer divergierenden Düse (2, 61) verbunden ist, durch die die aus der Verbrennung resultierenden Gase ausströmen, wobei der Kern (C) über sein dem Hals entgegengesetztes Ende (5A) mit Verbrennungsstoff versorgt wird und mit einer porösen Haut aus thermostrukturellem Verbundwerkstoff (5, 42, 66, 68) umgeben ist, die an ihrer dem Kern entgegengesetzten Außenseite Brennstoff aufnimmt, wobei ein Teil dieses Brennstoffs durch die poröse Haut in den Kern eingeführt wird, **dadurch gekennzeichnet, dass** der Teil des Brennstoffs, der durch die poröse Haut (5, 42, 66, 68) in den Kern (C) eingeführt wird, die Brennstoffversorgung des Motors darstellt und dass der Teil des Brennstoffs, der die poröse Haut nicht durchquert, zu dem Hals (3, 72) geleitet wird, um ihn zu kühlen.

2. Raketenmotor nach Anspruch 1, **dadurch gekennzeichnet, dass** die poröse Haut (5, 42, 66, 68) zu einem ersten thermostrukturellen monolithischen Verbundteil (40, 61, 67) gehört, das zwei Häute aus Verbundwerkstoff (41, 42; 65, 66; 68, 69) umfasst, die voneinander beabstandet sind, wobei sie zwischen ihnen einen Zwischenraum (44, 74, 75) bilden, und die durch eine Vielzahl fadenförmiger Querstreben (43) aus Verbundwerkstoff miteinander verbunden sind.

3. Raketenmotor nach Anspruch 2, der mit einer Längsachse (Z-Z) versehen ist und in dem die divergierende Düse (2) in der Verlängerung der Brennkammer (1) auf der Seite des Halses (3) angeordnet ist, der der Letztgenannten entgegengesetzt ist,
**dadurch gekennzeichnet, dass**:
- das erste monolithische Teil (40) zylindrisch ist und koaxial zur Längsachse (Z-Z) angeordnet ist, so dass eine der Häute (5, 42) innen ist, während die andere (41) außen ist;
- der Verbrennungsstoff von der Seite, die der Düse (2) entgegengesetzt ist, in das Innere des zylindrischen Volumens (C) eingeführt wird, das durch die Innenhaut (5, 42) begrenzt wird und den Kern der Brennkammer bildet; und
- der Brennstoff ebenfalls von der Seite, die der Düse (2) entgegengesetzt ist, in den Zwischenraum (6, 44) eingeführt wird, der hier einen ringförmigen Querschnitt aufweist.

4. Raketenmotor nach Anspruch 3, **dadurch gekennzeichnet, dass** die Außenhaut (41) des ersten monolithischen Teils (40) gegenüber Flüssigkeiten und Gasen abgedichtet ist.

5. Raketenmotor nach Anspruch 3 oder 4, **dadurch gekennzeichnet, dass** das erste monolithische Teil (40) einen Innendurchmesser (D) aufweist, der größer ist als jener (d) des Halses, und dass sich die ringförmige Öffnung (7) des Zwischenraums (6), die an der Seite der Düse (2) angeordnet ist, am Ort des zusammenlaufenden Abschnitts (4B) des Halses (3) befindet.

6. Raketenmotor nach einem der Ansprüche 2 bis 5, **dadurch gekennzeichnet, dass** die Düse (2) jenseits des Halses (3) eine Hülse (52) umfasst, die geeignet ist, das erste monolithische Teil aufzunehmen.

7. Raketenmotor nach einem der Ansprüche 2 bis 6, **dadurch gekennzeichnet, dass** die Düse (2) aus einem zweiten monolithischen Teil aus Verbundwerkstoff (50, 61) gebildet ist.

8. Raketenmotor nach einem der Ansprüche 2 bis 5, **dadurch gekennzeichnet, dass** die Düse (2) durch ein zweites monolitisches Teil aus Verbundwerkstoff (50) gebildet ist und dass das zweite monolithische Teil (50) eine Verlängerung der Außenhaut (41) des ersten monolithischen Teils (40) darstellt, wobei diese Verlängerung einen integralen Bestandteil der Außenhaut (41) bildet.

9. Raketenmotor nach Anspruch 2, der mit einer Längsachse (Z-Z) versehen ist und dem die Brennkammer (60) in der divergierenden Düse (61) in der Nähe der Spitze (62) der Letztgenannten angeordnet ist,
**dadurch gekennzeichnet, dass**:
- die Brennkammer (60) umfasst:
. ein erstes inneres monolitisches Verbundteil (64) von zylindrischer Form, das koaxial zur Achse (Z-Z) angeordnet ist und eine Innenhaut aus Verbundwerkstoff (65) und eine Außenhaut aus Verbundwerkstoff (66) aufweist; und
. ein erstes äußeres monolitisches Verbundteil (67) von zylindrischer Form, das koaxial zur Achse (Z-Z) angeordnet ist und eine Innenhaut aus Verbundwerkstoff (68) und eine Außenhaut aus Verbundwerkstoff (69) aufweist, wobei das erste äußere Teil (67) das erste innere Teil umgibt, so dass zwischen ihnen ein ringförmiger Kern (C) für die Brennkammer (60) gebildet wird;
- das erste innere (64) und äußere Teil (67) zwischen sich und der Spitze der divergierenden Düse einen ringförmigen Durchlass (72) zur Verbindung mit der Düse (61) bilden;
- der Verbrennungsstoff von der Seite, die der Spitze der Düse entgegengesetzt ist, in das Innere des ringförmigen Kerns (C) der Brennkammer eingeführt wird; und
- der Brennstoff von der Seite, die der Spitze der Düse entgegengesetzt ist, in die Zwischenräume (74, 75) mit ringförmigem Querschnitt des ersten inneren (64) und äußeren (67) Teils eingeführt wird.

10. Raketenmotor nach Anspruch 9, **dadurch gekennzeichnet, dass** die Innenhaut (65) des ersten inneren Teils (64) gegenüber Flüssigkeiten und Gasen abgedichtet ist.

11. Raketenmotor nach einem der Ansprüche 9 oder 10, **dadurch gekennzeichnet, dass** die Spitze (62) der divergierenden Düse (61) mit einer Öffnung (63) versehen ist und dass die Gesamtheit des ersten inneren (64) und äußeren (67) Teils mit der Düse (61) über ein drittes monolithisches Teil aus Verbundwerkstoff (71) in Form einer Büchse verbunden ist.

12. Raketenmotor nach einem der Ansprüche 9 bis 11, **dadurch gekennzeichnet, dass** die Brennkammer (60) über ein Teil (76) in Form einer Kuppel mit Brennstoff versorgt wird, das an der Seite der Brennkammer angeordnet ist, die der Spitze der Düse entgegengesetzt ist, und dessen konvexe Wand (78) zur Seite der Düse hin gerichtet und aus thermostrukturellem Verbundwerkstoff hergestellt ist.
